# EUROPÄISCHE PATENTANMELDUNG

(11) **EP 0 849 849 A2**
(43) Veröffentlichungstag der Anmeldung: **24.06.1998**
(21) Anmeldenummer: 97120920.0
(22) Anmeldetag: 28.11.1997
(51) Int. Cl.: H02B 1/40

(54) **Einrichtung zur vorderseitigen Abdeckung für Installationskästen, insbesondere für Unterputz-Installationkästen**

(30) Priorität: 17.12.1996 DE 29621869 U
(71) Anmelder: STRIEBEL & JOHN GmbH & Co. KG, D-77880 Sasbach (DE)
(72) Erfinder: Striebel, Franz, 77880 Sasbach (DE)
(74) Vertreter: Thoma, Friedrich, Dipl.-Ing.(FH)

(57) **Zusammenfassung**

Eine Einrichtung zur vorderseitigen Abdeckung für Installationskästen, insbesondere für Unterputz-Installationskästen (1), mit einer insbesondere ganzflächigen rahmenförmigen türartigen Abdeckung, ist als Spiegel (4) ausgebildet, auf einem Installationskasten (1) angeordnet.

## Beschreibung

Die Erfindung betrifft eine Einrichtung zur vorderseitigen Abdeckung für Installationskästen, insbesondere für Unterputz-Installationskästen, mit den Merkmalen nach dem Oberbegriff des Schutzanspruchs 1.

Bei derartigen Installationskästen, sogenannten Verteiler-, Schalt-, Regler- oder dergl. Kästen, insbesondere für die Elektro-, Signal-, Telekommunikations-, Heizungs- und/oder Sanitär-Installationstechnik, die in Wohn-, Büro-, Geschäfts-, Produktionsräumen, Treppenhäusern, Warteräumen oder dergl., an gut sichtbaren oder frequentierten Stellen, insbesondere als sogenannte Unterputz-Kästen, installiert sind, ist es vielfach erforderlich oder wünschenswert, insbesondere jedoch zweckmäßig, daß die Vorderseite dieser Kästen nicht nur optisch, der räumlichen Umgebung hinreichend angepaßt gestaltet ist, sondern auch, daß die Vorderseite bzw. die vorderseitige Abdeckung derartiger Kästen ten, über ihren eigentlichen Zweck hinaus, auch nützlich in einem Wohn-, Büro-, Geschäfts-, Produktions-, oder dergleichen Raum und dessen Ausstattungserfordernissen, eingesetzt wird. Dabei soll sichergestellt sein, daß die Bedienbarkeit der technischen Einrichtungen in derartigen Installationskästen durch die vorgesehene Vorrichtung nicht beeinträchtigt oder behindert wird.

Aus der DE-PS 40 01 478 ist eine Verteilerkasten-Abdeckung für elektrische in einer Wand eingemauerte Verteilungen oder Sicherungseinrichtungen bekannt, bei der die Verteilerkasten-Abdeckung oder -Tür als Bildträger ausgebildet ist und entweder ganzflächig rahmenlos oder bei Verwendung eines Kasten- oder Türrahmens dieser als Bilderrahmen ausgebildet ist.

Diese, in der Praxis bewährte, Verteilerkasten-Abdeckung erfüllt jedoch im wesentlichen nur geschmackliche Wünsche oder Erfordernisse in Wohn-, Büro-, Geschäfts-, Produktions- oder dergl. Räumlichkeiten.

Außerdem ist es bekannt, die Vorderseite derartiger Kästen zu tapezieren, zu verputzen oder ein Bild oder einen Spiegel darüber zu hängen.

Auch diese Ausführungen sind mit dem Nachteil behaftet, daß ein Übertapezieren oder Überputzen der vorderseitigen Kastenabdeckung nicht verhindert, daß die Nahtstellen zwischen Kasten und Kastenabdeckung optisch störend sichtbar bleiben bzw. daß beim Abdecken solcher Kästen beispielsweise mittels eines vorgehängten Bildes oder eines Spiegels, zum Bedienen des Kastens das Bild oder der Spiegel abgehängt werden muß, was nicht nur umständlich, sondern auch zur Beeinträchtigung des vorgehängten Gegenstandes bzw. dessen unmittelbare oder mittelbare Aufhängevorrichtung führen kann.

Der Erfindung liegt die Aufgabe zugrunde, eine Einrichtung zur vorderseitigen Abdeckung für derartige Installationskästen zu schaffen, die nicht nur nützlich ist, sondern die auch vielseitig, zweckmäßig und sinnvoll gestaltbar und einsetzbar, sondern die auch wirtschaftlich herstellbar, einfach und rationell montierbar ist, ohne daß die Bedienbarbeit der abgedeckten Verteilertechnik beeinträchtigt ist.

Diese Aufgabe wird mit den Merkmalen im kennzeichnenden Teil des Schutzanspruch 1 gelöst und in den Unteransprüchen sind weitere vorteilhafte Einzelheiten beansprucht.

Vorteilhaft bei dieser neuen und zweckmäßigen Einrichtung zur vorderseitigen Abdeckung der eingangs erwähnten Installationskästen, ist nicht nur die dort vorgesehene ganze oder nur teilweise Ausbildung der vorderseitigen Fläche der Installationskasten-Abdeckung als Spiegel und/oder als Informationsanzeigetafel und/oder als flächenförmige Leuchte, sondern auch, daß mit dieser Einrichtung für die vorderseitige Abdeckung derartiger Installationskästen, die üblicherweise an räumlich gut zugänglichen und somit gut sichtbaren Stellen montiert sind, ein zweckmäßiger und optimaler Einsatz- und Nutzungseffekt erzielt wird.

Der Spiegel kann aus üblichem Spiegelglas hergestellt sein. In Weiterbildung dieser neuen Einrichtung ist es jedoch vorgesehen, daß zur Herstellung einer spiegelartigen Reflexionsschicht oder eines echten Spiegelbildes, eine optoelektrisch oder optoelektronisch steuerbare Anzeigetafel, insbesondere in der Ausführung eines LCD-Displays oder eines optoelektronischen Flachbildschirms oder einer, aus einzelnen elektromechanisch steuerbaren, Anzeigemodulen gebildeten Anzeigetafel, zum Einsatz kommt. Dabei ist es in diesem Zusammenhange vorgesehen, daß zur Erzeugung eines echten Spiegelbildes und in Verbindung mit dem Einsatz eines LCD-Displays bzw. eines Flachbildschirms auch eine elektronische Aufnahmekamera einsetzbar ist.

Mit einer derartigen, gegenüber einem üblichen mechanischen Spiegel, weitergebildeten Einrichtung ist es nicht nur möglich, einen perfekten Spiegel bzw. ein echtes Spiegelbild zu erzeugen, sondern diese neue und zweckmäßige Einrichtung ist in vorteilhafter Weise auch als Informationsanzeigetafel einsetzbar.

Ein derartiger üblicher oder optoelektronischer Spiegel kann ganz- oder nur teilflächig zur Abdeckung der eingangs erwähnten Installationskästen ausgebildet sein. Insbesondere bei Einsatz einer optoelektronischen Spiegel-Anzeigetafel ist es in vorteilhafter Weise vorgesehen, auch Informationen jeglicher Art auf der neuen Einrichtung darzustellen. Dabei ist daran gedacht, eine derartige Anzeigetafel bzw. Bildfläche auch als Werbefläche, Wegweiser, Suchanzeige, Stockwerks- oder Zimmerbelegungshinweis, Firmenemblemanzeige, Darstellung der abgedeckten Verteilertechnik oder dergl. Informationsanzeigen in realer Bilddarstellung oder in einer Piktogrammdarstellung zweckmäßig und vorteilhaft einzusetzen.

Eine derartige Informationsanzeigetafel ermöglicht beispielsweise auch die Anzeige der Uhrzeit, des Datums, der Temperatur, des Luftdrucks, der Luftfeuchtigkeit oder dergl. aktueller Informationen.

In diesem Rahmen ist es auch vorgesehen, daß die neue Einrichtung zweckmäßigerweise mit einer, insbesondere flächenförmig ausgebildeten, Leuchte versehen ist, die insbesondere im Bereich des Rahmens vorgesehen ist. Eine derartige, insbesondere optoelektronische, Leuchte, kann erforderlichenfalls über die gesamte vorderseitige Abdeckfläche verlaufen. Eine dort vorgesehene Leuchte, die insbesondere Rahmenbereich angeordnet ist, dient nicht nur zur Ausleuchtung beim Einsatz der neuen Einrichtung als kameragestütztem Spiegel, sondern ist auch als Raumleuchte zweckmäßig und vorteilhaft einsetzbar.

Es ist insbesondere vorgesehen, daß die neue Einrichtung unmittelbar als installationskastenspezifische Abdeckung ausgebildet ist. Insbesondere ist es vorgesehen, diese neue Einrichtung in Form, Größe und Ausstattung derart auszubilden und einzurichten, daß diese einfach und unfachmännisch auf bereits vorhandene bzw. installierte Installationskästen, gegen die alten Abdeckungen austauschbar, montierbar ist. Vorteilhaft ist ferner die zweckmäßige und wirtschaftliche Bevorratung der neuen Einrichtung.
Einige Ausführungs- und Anwendungsbeispiele der neuen Einrichtung sind in den Zeichnungen dargestellt und werden im folgenden näher erläutert.

Es zeigen
- Fig. 1: eine schaubildliche Ansicht eines Unterputz-Installationskastens für die Elektro-Installationstechnik mit einer vorderseitigen Einrichtung in der Ausführung als Spiegel und
- Fig. 2: eine Vorderansicht auf eine vorderseitige Verteilerkastenabdeckung mit einer Einrichtung in einer Ausführung als optoelektronischer Spiegel und/oder als Informationsanzeigetafel.

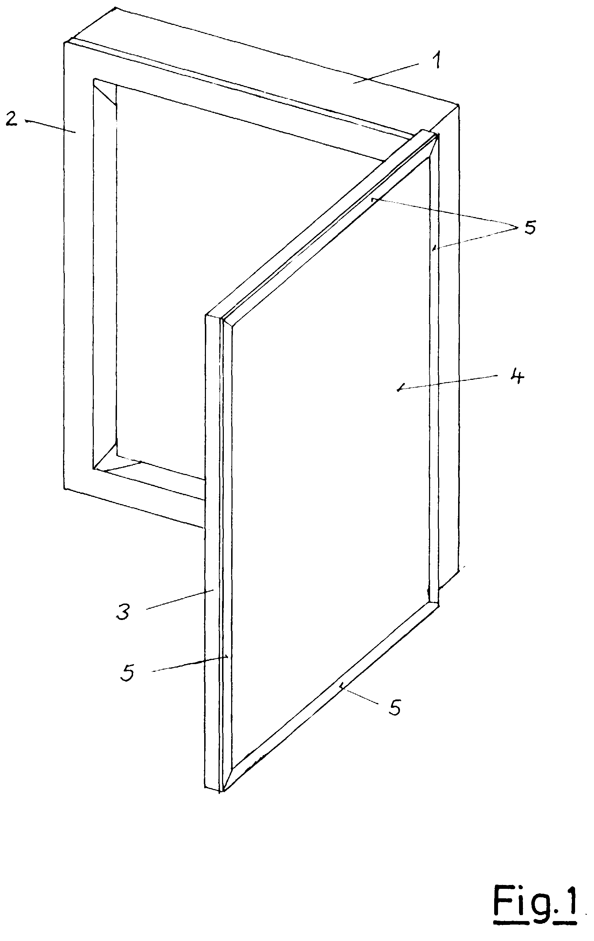

Die Fig. 1 zeigt im einzelnen einen Unterputz-Installationskasten 1 für die Elektroinstallation. 2 kennzeichnet einen vorderseitigen Blendrahmen, der mit dem Verteilerkasten 1 lösbar kraftschlüssig verbindbar ist und auf dem der Tür-Rahmen 3 gelagert ist. Im Tür-Rahmen 3 ist die neue Einrichtung in der Ausführung eines ganzflächig gerahmten Spiegels 4 angeordnet und gelagert. Der Spiegel 4 besteht zweckmäßigerweise aus Spiegelglas oder einem sonstigen Spiegelelement, das selbsttragend oder folienartig ausgebildet ist und vorderseitig erforderlichenfalls mit einer durchsichtigen Scheibe abgedeckt sein kann.

Es liegt im Rahmen der Erfindung, daß der Spiegel 4 auch rahmenlos ausgebildet und mittels entsprechender Scharniere unmittelbar, als Tür bedienbar ausgebildet, auf dem Blendrahmen 2 angeordnet und gelagert ist.

Außerdem liegt es im Rahmen der Erfindung, daß der Spiegel 4 zweckmäßigerweise mittels einer elektrischen Lichtquelle direkt oder indirekt beleuchtbar ist, und dadurch in vorteilhafter Weise auch als Leuchte einsetzbar ist. Die gesamte Spiegelfläche wirkt dadurch als Leuchte, ohne dadurch ihre Spiegelfunktion zu verlieren.

Eine oder mehrere Lichtquellen 5 sind im Bereich des Tür-Rahmens 3 insbesondere hinter dem Tür-Rahmen 3 angeordnet. Der Tür-Rahmen 3 ist erforderlichenfalls als transparenter Lichtleiter oder als transparentes Abdeckglas ausgebildet.

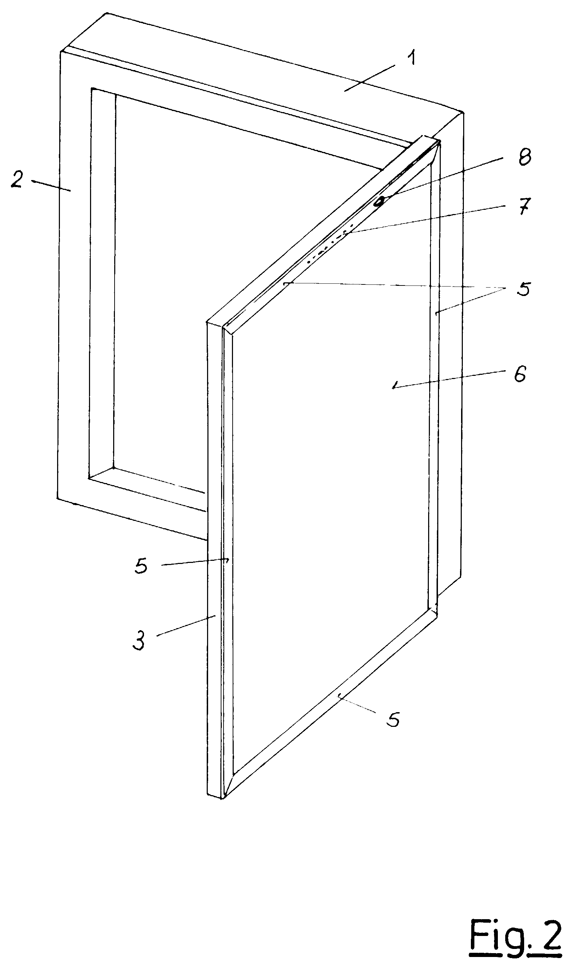

Aus der Fig. 2 ist eine neue Einrichtung zur vorderseitigen Abdeckung eines sogenannten Verteilerkastens oder dergl. ersichtlich, die als insbesondere ganzflächige, elektrisch oder elektronisch arbeitende Spiegelfläche und/oder als Informationsanzeigetafel 6 ausgebildet ist. 3 bezeichnet dort den äußeren Tür-Rahmen, zur Lagerung der Spiegel- und/oder Informationsanzeigetafel 6 am Blendrahmen 2 eines Installationskastens 1.

Diese Informationsanzeigetafel 6 ist insbesondere als optoelektrisch oder optoelektronisch arbeitendes Display ausgebildet, zur insbesondere piktogrammförmigen Anzeige jeglicher Information. Insbesondere ist daran gedacht, mit einer derartigen Informationsanzeigetafel 6 nicht nur die, von dieser Tafel 6 abgedeckte, Verteilertechnik darzustellen, sondern es ist dort vorgesehen, auch die Uhrzeit und/oder das Datum, die Temperatur, den Luftdruck, die Luftfeuchtigkeit u.s.w. zweckmäßig und nützlich anzuzeigen.

Darüberhinaus ist es vorgesehen, diese Informationsanzeigetafel 6 auch als Personen-Ruf- und -Suchinformationenanzeige einzusetzen. In diesem Zusammenhang ist auch die Einrichtung einer akustischen Signalwiedergabe in Form eines Lautsprechers 7 auf einer derartigen Tafel 6 vorgesehen.

Zweckmäßigerweise ist die Informationsanzeigetafel 6 als optoelektronisches LCD-Display oder als TV-tauglicher Flachbildschirm ausgebildet. 8 bezeichnet eine elektronische Aufnahmekamera, zur Erzeugung eines Spiegelbildes eines vor der Informationstafel stehenden Betrachters. Die Aufnahmekamera 8 ist zweckmäßigerweise im Bereich des Tür-Rahmens 3 angeordnet bzw. dort integriert.

Anstelle eines optoelektronischen Displays oder Bildschirms, ist es auch vorgesehen, sogenannte optoelektrisch arbeitende Anzeigemodule für eine matrixförmige aufgebaute Anzeigetafel 6 einzusetzen, bei denen die einzelnen mechanischen Anzeigeelemente der Anzeigemodule auf der Vorder- oder Anzeigeseite u.a. mit einer Spiegelfläche versehen sind.

Mit einer derartigen optoelektrischen oder optoelektronischen Informationsanzeigetafel 6 ist es auch möglich, eine, mit einem mechanischen Spiegel 4 der Fig. 1 vergleichbare, Spiegelschicht darzustellen und einzusetzen. 5 bezeichnet eine insbesondere flächig ausgebildete Leuchte im Bereich des Tür-Rahmens 3.

Anstelle eines in den Fig. 1 und 2 dargestellten Installationskastens 1, ist es im Rahmen der Neuerung vorgesehen, daß die neuerungsgemäße Informationstafel 6 in jeder erforderlichen Abmessung derartiger Installationskästen 1 zweckmäßig und vorteilhaft ausbildbar ist.

## Patentansprüche

1. Einrichtung zur vorderseitigen Abdeckung für Installationskästen, insbesondere für Unterputz-Installationskästen, mit einer insbesondere ganzflächigen rahmenförmigen türartigen Abdeckung, **dadurch gekennzeichnet**, daß die Einrichtung als Spiegel (4) ausgebildet, auf einem Installationskasten (1) angeordnet ist.

2. Einrichtung nach Anspruch 1, dadurch gekennzeichnet, daß der Spiegel (4) aus Spiegelglas hergestellt ist.

3. Einrichtung nach Anspruch 1, dadurch gekennzeichnet, daß der Spiegel (4) optoelektrisch bzw. optoelektronisch von einer Informationsanzeigetafel (6) gebildet wird.

4. Einrichtung nach Anspruch 3, dadurch gekennzeichnet, daß die Informationsanzeigetafel (6) als LCD-Display oder Flachbildschirm ausgebildet ist.

5. Einrichtung nach Anspruch 3, dadurch gekennzeichnet, daß die Informationsanzeigetafel (6) aus matrixförmig angeordneten Anzeigemodulen gebildet ist.

6. Einrichtung nach Anspruch 1 bis 5, dadurch gekennzeichnet, daß der Spiegel (4) bzw. die Informationsanzeigetafel (6) direkt oder indirekt beleuchtet ist.

7. Einrichtung nach Anspruch 1 bis 6, dadurch gekennzeichnet, daß der Tür-Rahmen (3) als Leuchte (5) ausgebildet ist.

8. Einrichtung nach Anspruch 1 bis 7, dadurch gekennzeichnet, daß im Bereich des Tür-Rahmens (3) ein Lautsprecher (7) und/oder eine elektronische Aufnahmekamera (8) angeordnet bzw. integriert ist.
